# EUROPEAN PATENT APPLICATION

(11) **EP 2 457 877 A1**
(43) Date of publication of application: **30.05.2012**
(21) Application number: 10802121.3
(22) Date of filing: 20.05.2010
(51) Int. Cl.: C02F 1/44, B01D 61/58

(54) **WATER PRODUCING SYSTEM**

(30) Priority: 21.07.2009 JP 2009169818
(71) Applicant: Toray Industries, Inc., Tokyo 103-8666 (JP)
(72) Inventor: TAKABATAKE, Hiroo, Otsu-shi Shiga 520-8558 (JP); SUZUKI, Hironobu, Otsu-shi Shiga 520-8558 (JP); TANIGUCHI, Masahide, Otsu-shi Shiga 520-8558 (JP)
(74) Representative: Hager, Thomas Johannes
(86) International application number: PCT/JP2010/058523
(87) International publication number: WO 2011/010500

(57) **Abstract**

To provide a water producing system that produces fresh water by treating treatment target water A at a first semipermeable membrane treatment plant 2, that mixes concentrate resulted by the treatment carried out at the first semipermeable membrane treatment plant 2 with treatment target water B, and that treats the mixed water at a second semipermeable membrane treatment plant 3 to produce fresh water, **characterized in** provision of a bypass line that allows the treatment target water A to be mixed with the treatment target water B or the concentrate while bypassing the first semipermeable membrane treatment plant 2, so that the second semipermeable membrane treatment plant 3 can operate even when any trouble occurs at the first semipermeable membrane treatment plant 2 and treatment cannot be carried out thereby.

## Description

### TECHNICAL FIELD

The present invention relates to a water producing system using composite water treatment technologies, and to a system in which fresh water is obtained from raw water, which is treatment target water A and treatment target water B differing from each other in osmotic pressure, through a fresh water conversion technology. In more detail, the present invention relates to a system for producing fresh water that can be applied to the field of water clarification treatment in waterworks, the field of industrial-use water production such as industrial water, food and medical process water, and semiconductor-related component cleaning water, in an energy saving and efficient manner.

### BACKGROUND ART

In recent years,many water-related technologieshave been developed. Among others, membrane separation has been coming into wide use in various fields for its characteristics of being capable of achieving: energy saving; space saving; reduction in power consumption; improvement in quality of the product, and the like.

The separation membrane used in water treatment can generally be classified into two, namely nano-filtration membrane (NF membrane)/reverse osmosis membrane (RO membrane), and microfiltration membrane (MF membrane)/ultrafiltration membrane (UF membrane). The former is used in desalination, deionization and the like from seawater or brackish water, while the other is used in water cleaning process for producing industrial water or tap water from river water, groundwater, or treated sewage. Further, what is actively introduced is "membrane bioreactor (Membrane Bioreacter; MBR) " in which sewage or industrial drainage which has conventionally been treated by the activated sludge process is treated by MF/UF membrane directly immersed in activated sludge tank.

Under recent circumstances where attention to water shortage is called, these water treatment method using membranes have undergone further technical development. In recent years, a great number of water producing plants that employ a scheme referred to as "integrated membrane system (Integrated Membrane System; IMS)", in which: pre-treatment of removing organic substances and particulates in seawater or brackish water by using the MF/UF membrane, or of cleaning sewage or industrial waste water by using the MBR is carried out; and thereafter treatment is carried out using the RO membrane, to thereby efficiently obtain fresh water, are built in those regions such as Middle East region, Asia region suffering from water shortage.

Currently, a system that produces freshwater fromseawater or brackish water may be based on, for example, the technology in which a pre-treatment by sand filtration which is a conventional water clarification technology is carried out, and thereafter treatment is carried out with the NF/RO membrane. In addition thereto, it may be based on the method as described above, in which seawater or brackish water is pre-treated using the MF/UF membrane, and thereafter treatment is carried out with the NF/RO membrane. However, with this system, since salt in the seawater cannotbe removedbythepre-treatment, desalination is entirely carried out with the NF/RO membrane at the rear stage. Then, with the NF/RO membrane treatment method which requires supply pressure being higher than the osmotic pressure, pressure must be applied when supplying raw water to the NF/RO membrane with pump called "booster pump". That is, as the salt concentration of raw water supplied to the NF/RO membrane is higher, the osmotic pressure becomes higher. Therefore, it becomes necessary to apply higher pressure with the booster pump, and the energy for allowing the booster pump to operate becomes necessary.

For the purpose of solving these problems, the membrane treatment system being the integration of the high-level treatment of sewage and seawater desalination as disclosed in Non-Patent Documents 1 and 2 is developed, and a verification test by a pilot test is about to start. According to the present technology, after sewage is treated by the MBR, fresh water is produced using the RO membrane, and the concentrate resulted from the treatment with the RO membrane is mixed with seawater. Therefore, it becomes possible to produce fresh water more efficiently than in the conventional manner, and to reduce the salt concentration in seawater, whereby the specification of the booster pump for carrying out the RO membrane treatment in seawater desalination can more be simplified than in the conventional manner. Thus, a further energy-saving system is implemented.

However, in the flow diagram of the system disclosed in Non-Patent Documents 1 and 2, the liquid delivery line from the sewage treatment line side to the seawater desalination treatment line side is solely the line that delivers the concentrate from the RO membrane treatment. Such a system involves the following problem. In a case where any trouble happens to occur in the RO membrane used in the system that produces fresh water from sewage, and the system becomes incapable of carrying out treatment, or where the RO membrane stops its operation due to regular inspection or agent cleaning, the liquid delivery from the system that produces fresh water from sewage to the system that produces fresh water from seawater ceases, because of which the advantage of the system disclosed in Non-Patent Documents 1 and 2 is lost. Further, as to sewage or industrial waste water, the treatment-target flow rate fluctuates on an hourly or daily basis. With the system disclosed in Non-Patent Documents 1 and 2, in a case where treated water of sewage or industrial waste water is obtained in an amount more than suppliable to the RO membrane on the sewage treatment side, the clean treated water that can be supplied to the RO membrane should be subjected to discharging or disposal, which is not efficient.

Further, on the seawater desalination treatment line side of the system disclosed in Non-Patent Documents 1 and 2, since seawater is directly supplied to the RO membrane without being subjected to pre-treatment, there is a problem that the organic substances and particulates in seawater are caught by the RO membrane, and thus the RO membrane tends to be clogged and cannot be used for a long term.

### PRIOR ART DOCUMENTS

### NON-PATENT DOCUMENTS

Non-Patent Document 1: "Kobelco Eco-Solutions Co., Ltd. and Four Others Conduct Demonstration Experiment of Model Project Launched by Ministry of Economy, Trade and Industry in Shunan-shi", [online], March 5, 2009, Nihon Suido Shinbun, [searched for on July 2, 2009], via the Internet <http://www.suido-gesuido.co.jp/blog/suido/2009/03/post_278 0.html>
Non-Patent Document 2: "Adoption of "Discover Technology Seeds Aiming at Low-Carbon Society / Social System Verification Model Project"", [online], March 2, 2009, press release from Toray Industries, Inc. [searched for on July 2, 2009], via the Internet <http://www.toray.co.jp/news/water/nr090302.html>

### SUMMARY OF THE INVENTION

### PROBLEM TO BE SOLVED BY THE INVENTION

An object of the present invention is to provide a water producing system using composite water treatment technologies, in which a second semipermeable membrane treatment plant used for treating treatment target water B can operate even in a case where any trouble occurs in a first semipermeable membrane treatment plant used for treating treatment target water A and hence treatment cannot be carried out thereby.

### SOLUTIONS TO THE PROBLEMS

In order to solve the problem stated above, the present invention is structured as follows.
(1) A water producing system that produces fresh water by treating treatment target water A at a first semipermeable membrane treatment plant, that mixes concentrate resulted by the treatment carried out at the first semipermeable membrane treatment plant with treatment target water B, and that treats the mixed water at a second semipermeable membrane treatment plant to produce fresh water, wherein a bypass line that allows the treatment target water A to be mixed with the treatment target water B or the concentrate while bypassing the first semipermeable membrane treatment plant is provided.
(2) The water producing system according to (1), including bypass line flow rate adjusting means for adjusting flow rate of the treatment target water A to be delivered to the bypass line.
(3) The water producing system according to (2), including
   a treatment target water A storage reservoir that stores the treatment target water A, wherein the bypass line flow rate adjusting means is bypass line flow rate adjusting means that adjusts the flow rate of the treatment target water A to be delivered to the bypass line depending on water level of the treatment target water A stored in the treatment target water A storage reservoir.

(4) The water producing system according to one of (2) and (3), including first treatment target water flow rate measuring means for measuring the flow rate of the treatment target water A to be delivered to the first semipermeable membrane treatment plant, wherein the bypass line flow rate adjusting means is bypass line flow rate adjusting means for adjusting the flow rate of the treatment target water A to be delivered to the bypass line depending on flow rate value of the treatment target water A measured by the first treatment target water flow rate measuring means.
(5) The water producing system according to one of (2) to (4), including second treatment target water flow rate measuring means for measuring supply flow rate of the treatment target water A, wherein the bypass line flow rate adjusting means is bypass line flow rate adjusting means for adjusting the flow rate of the treatment target water A to be delivered to the bypass line depending on the flow rate value of the treatment target water A measured by the second treatment target water flow rate measuring means.
(6) The water producing system according to one of (2) to (5), including concentrate flow rate measuring means for measuring flow rate of the concentrate, wherein the bypass line flow rate adjusting means is bypass line flow rate adjusting means for adjusting the flow rate of the treatment target water A to be delivered to the bypass line depending on the flow rate value of the concentrate measured by the concentrate flow rate measuring means.

(7) The water producing system according to one of (1) to (6), including concentrate discharging means for discharging at least part of the concentrate to outside of the system, wherein at least part of the concentrate is discharged by the concentrate discharging means when the treatment target water A is delivered from the bypass line.
(8) The water producing system according to one of (1) to (7), including a concentrate storage reservoir that stores the concentrate, wherein the bypass line communicates with the concentrate storage reservoir.
(9) The water producing system according to (8), including: concentrate discharging means for discharging at least part of the concentrate to outside of the system; and concentrate discharge control means for discharging the concentrate to the outside the system by the concentrate discharging means when a water level of the concentrate storage reservoir is equal to or greater than a prescribed value.

(10) The water producing system according to (9), including: bypass line flow rate measuring means for measuring flow rate of the treatment target water A being delivered through the bypass line, or mixed water flow rate measuring means for measuring flow rate of mixed water of the treatment target water A being delivered through the bypass line and the concentrate; treatment target water B delivery means for delivering the treatment target water B; and treatment target water B flow rate adjusting means for adjusting flow rate of the treatment target water B to be delivered by the treatment target water B delivery means, based on flow rate value measured by the bypass line flow rate measuring means or the mixed water flow rate measuring means.
(11) The water producing system according to one of (1) to (10), wherein the treatment target water A is treated at a first pre-treatment plant, and thereafter treated at the first semipermeable membrane treatment plant, to produce fresh water.
(12) The water producing system according to one of (1) to (11), wherein the treatment target water B is treated at a second pre-treatment plant, and thereafter treated at a second semipermeable membrane treatment plant, to produce fresh water.

### EFFECTS OF THE INVENTION

According to the present invention, in a water producing system using the composite water treatment technology, even in a case where a trouble occurs in a first semipermeable membrane used for treating treatment target water A and hence treatment cannot be carried out thereby, a second semipermeable membrane treatment plant used for treating treatment target water B is allowed to operate. Thus, a system that continuously operates stably can be structured.

### BRIEF DESCRIPTION OF THE DRAWINGS

Fig. 1 is a flowdiagramof an integrated sewage and seawater to fresh water conversion system disclosed in Non-Patent Documents 1 and 2.
Fig. 2 is a flow diagram of one embodiment of a water producing system of the present invention.
Fig. 3 is a flow diagram of another embodiment of the water producing system of the present invention.
Fig. 4 is a flow diagram of still another embodiment of the water producing system of the present invention.
Fig. 5 is a flow diagram of yet another embodiment of the water producing system of the present invention.
Fig. 6 is a flow diagram of yet another embodiment of the water producing system of the present invention.
Fig. 7 is a flow diagram of yet another embodiment of the water producing system of the present invention.
Fig. 8 is a flow diagram of yet another embodiment of the water producing system of the present invention.

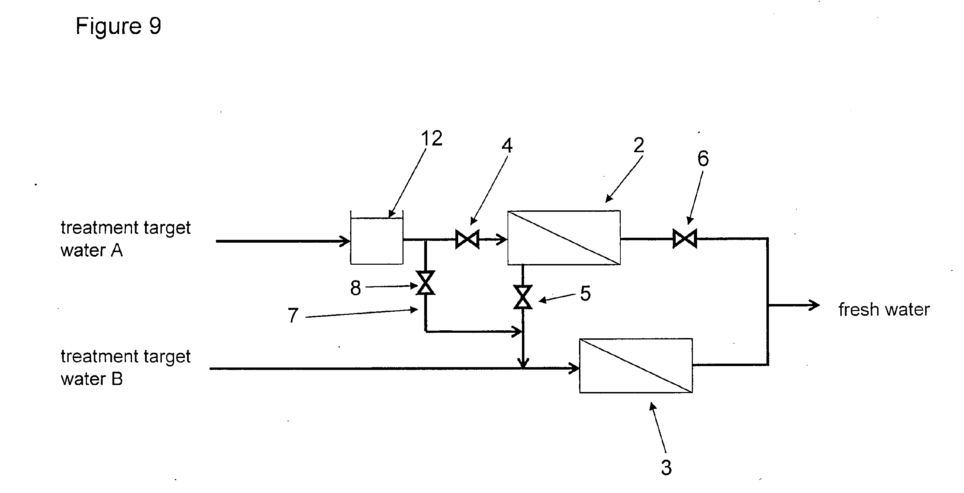

Fig. 9 is a flow diagram of yet another embodiment of the water producing system of the present invention.
Fig. 10 is a flow diagram of yet another embodiment of the water producing system of the present invention.
Fig. 11 is a flow diagram of yet another embodiment of the water producing system of the present invention.
Fig. 12 is a flow diagram of yet another embodiment of the water producing system of the present invention.
Fig. 13 is a flow diagram of yet another embodiment of the water producing system of the present invention.
Fig. 14 is a flow diagram of yet another embodiment of the water producing system of the present invention.

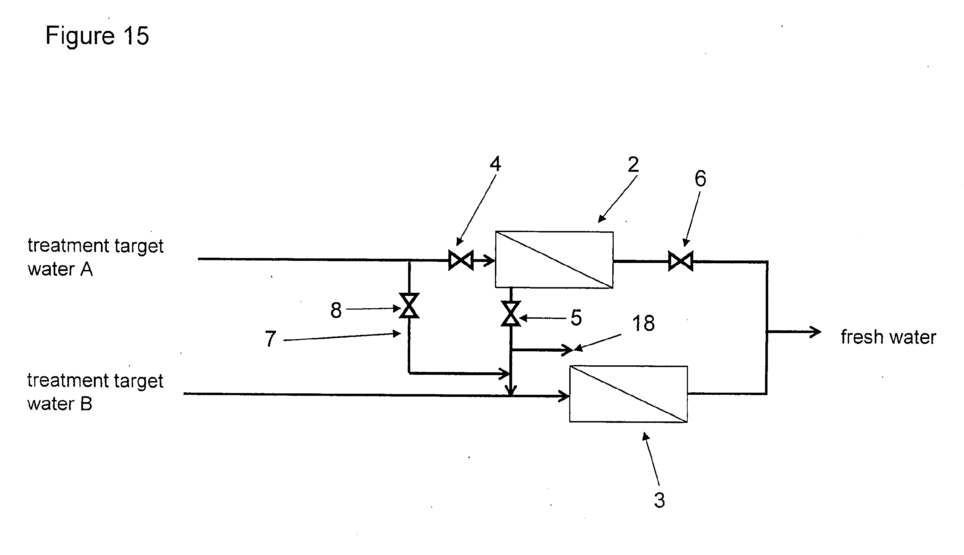

Fig. 15 is a flow diagram of yet another embodiment of the water producing system of the present invention.
Fig. 16 is a flow diagram of yet another embodiment of the water producing system of the present invention.
Fig. 17 is a flow diagram of yet another embodiment of the water producing system of the present invention.

### MODES FOR CARRYING OUT THE INVENTION

In the following, with reference to the drawings, a description will be given of desirable embodiments of the present invention. It is to be noted that, the scope of the present invention is not limited thereto.

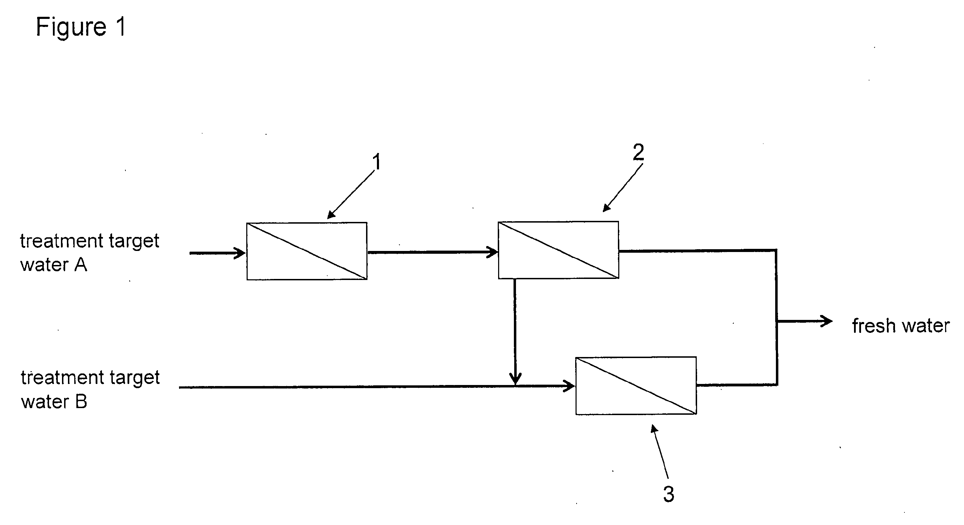

Fig. 1 is a flow diagram of the integrated sewage and seawater to fresh water conversion system disclosed in Non-Patent Documents 1 and 2. Treatment target water A (sewage in the documents) undergoes decomposition of organic substances and separation of floating components or particulates at a first pre-treatment plant 1 (the MBR in the documents), and thus treated water can be obtained. Further, this treated water is filtered at a first semipermeable membrane treatment plant 2 (the RO membrane treatment plant in the documents), on the treatment target water A treatment line side, whereby product water (pure water) and concentrate can be obtained. According to the technology disclosed in the documents, the concentrate obtained at this point is merged with a treatment target water B treatment line, to be mixed with treatment target water B (seawater in the documents), so as to achieve a reduction in the osmotic pressure of the treatment target water B. The treatment target water B mixed with the concentrate is filtered at a second semipermeable membrane treatment plant 3 (the RO membrane treatment plant in the documents), whereby the product water (pure water) and the concentrate can be obtained. Thereafter, the product water (pure water) obtained at the first semipermeable membrane treatment plant 2 and that obtained at the second semipermeable membrane treatment plant 3 are merged with each other and used for various purposes.

However, with the treatment system in Fig. 1, the liquid delivery line from the treatment target water A treatment line side to the treatment target water B treatment line side is solely the line that delivers concentrate obtained at the first semipermeable membrane treatment plant 2. Such a system involves the following problems. In a case where any trouble happens to occur in the whole or part of the first semipermeable membrane treatment plant 2 or in a case where it requires agent cleaning and it stops its operation, and hence the first semipermeable membrane treatment plant 2 becomes incapable of fully carrying out the treatment, the liquid delivery from the treatment target water A treatment line to the treatment target water B treatment line side ceases, or the amount of delivered liquid drops. This causes a reduction in the osmotic pressure of the treatment target water B, because of which the advantage of a reduction in energy consumption for the operation of the second semipermeable membrane treatment plant may be lost, or the second semipermeable membrane treatment plant 3 may be forced to stop its operation totally or partially, depending on the specification of the second semipermeable membrane treatment plant 3. Further, there is also a problem that, in a case where the flow rate of the treatment target water A fluctuates as in the case of sewage, when the flow rate of the treatment target water A that can be supplied to the first semipermeable membrane treatment plant 2 exceeds the flow rate treatable at the first semipermeable membrane treatment plant 2, part of the treatment target water A cannot be treated with the semipermeable membrane.

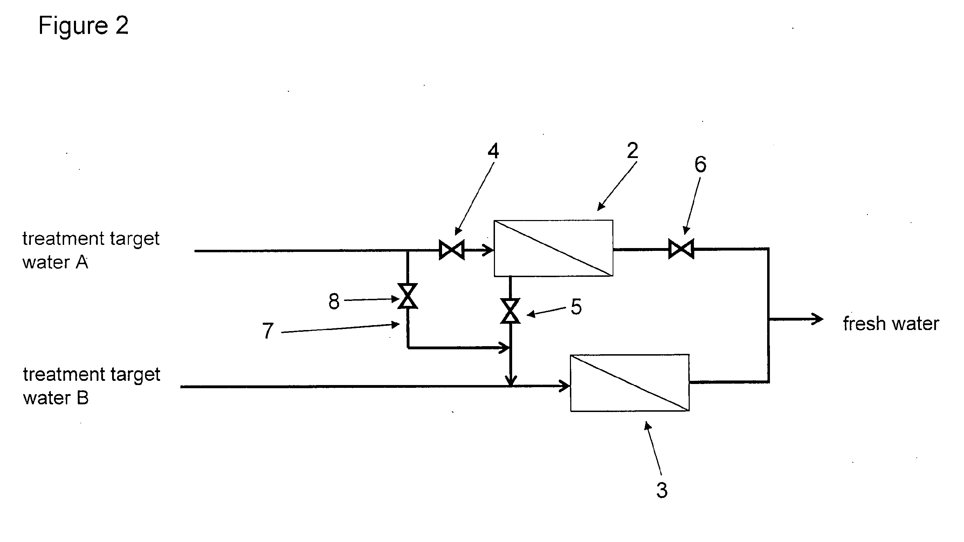

Accordingly, as a result of elaborate study made by the present inventors for solving the problems, as shown in Fig. 2, what is developed is a water producing system provided with a bypass line for allowing the treatment target water A to mix into the treatment line of the treatment target water B while bypassing the first semipermeable membrane treatment plant 2. With this system, in the normal operation mode in which the first semipermeable membrane treatment plant 2 on the treatment target water A treatment line side is in operation, a feed water valve 4, a concentrate valve 5, and a product water valve 6 connected to the first semipermeable membrane treatment plant 2 are all opened, while a bypass line valve 8 associated with the treatment target water A is closed, so as to prevent the treatment target water A from flowing into a bypass line pipe 7 associated with the treatment target water A. Thus, the treatment target water A is treated at the first semipermeable membrane treatment plant 2, to be separated into product water (pure water) and concentrate. Thereafter, the concentrate merges with the treatment target water B treatment line, and mixed with the treatment target water B. Thereafter, the mixed water is treated at the second semipermeable membrane treatment plant 3, to be separated into product water (pure water) and concentrate. That is, in the present invention, it is preferable that the osmotic pressure of the concentrate obtained by the first semipermeable membrane treatment plant 2 is smaller than the osmotic pressure of the treatment target water B. Thus, by mixing the concentrate and the treatment target water B, a reduction in the osmotic pressure to become lower than that of the treatment target water B can be achieved, whereby a reduction in the power required for the treatment at the second semipermeable membrane treatment plant 3 can be expected. Such treatment target water A and treatment target water B can be any water so long as the relationship of the osmotic pressures satisfies the above-stated relationship. Examples thereof may be seawater, brackish water, sewage, industrial waste water, river water and the like.

Here, for example, in a case where any trouble occurs at the first semipermeable membrane treatment plant 2 or when the first semipermeable membrane treatment plant 2 requires agent cleaning, and hence the first semipermeable membrane treatment plant 2 totally stops, the feed water valve 4, the concentrate valve 5, and the product water valve 6 connected to the first semipermeable membrane treatment plant 2 are all closed, while the bypass line valve 8 is opened, so as to allow the treatment target water A to flow into the bypass line pipe 7 to merge with the treatment target water B treatment line. The treatment target water B merged with the treatment target water A contributes toward a reduction in the osmotic pressure of the treatment target water B, and the product water can be obtained from the second semipermeable membrane treatment plant. Further, for example in a case where the first semipermeable membrane treatment plant 2 is structured with a plurality of system lines, and part of the system lines is stopped, the total supply amount of the treatment target water A to the first semipermeable membrane treatment plant 2 and the flow rate of the concentrate become smaller than those in the normal mode. In such a case, by supplying the whole or part of the treatment target water A not supplied to the first semipermeable membrane treatment plant 2 via the bypass line so as to merge with the treatment target water B, it becomes possible to realize a reduction in the osmotic pressure of the treatment target water B which is equivalent to or more than that in the normal mode, and the product water can be obtained from the second semipermeable membrane treatment plant. Further, in a case where the flow rate of the treatment target water A fluctuates, and the flow rate of the treatment target water A that can be supplied to the first semipermeable membrane treatment plant 2 exceeds the treatable flow rate at the first semipermeable membrane treatment plant 2, the excessive treatment target water A is supplied via the bypass line so as to serve as diluting water for the treatment target water B.

Here, it is preferable that bypass line flow rate adjusting means for adjusting the flow rate of at least part of the treatment target water A delivered to the bypass line is provided. The bypass line flow rate adjusting means is not limited to those that have a function of controlling the flow rate of the treatment target water A delivered through the bypass line, but also includes those that have a function of controlling start and stop of delivery of the treatment target water A through the bypass line. Specifically, a valve, a pump, an overflow pipe and the like may be included.

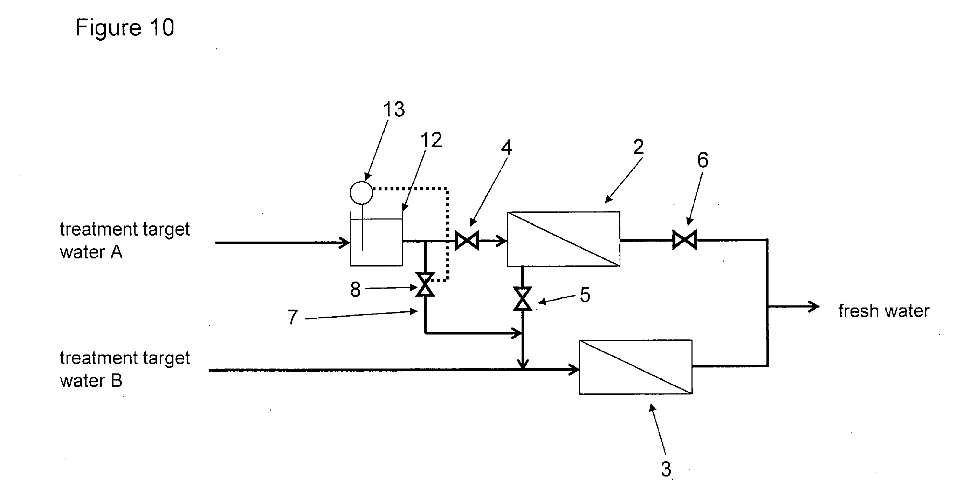

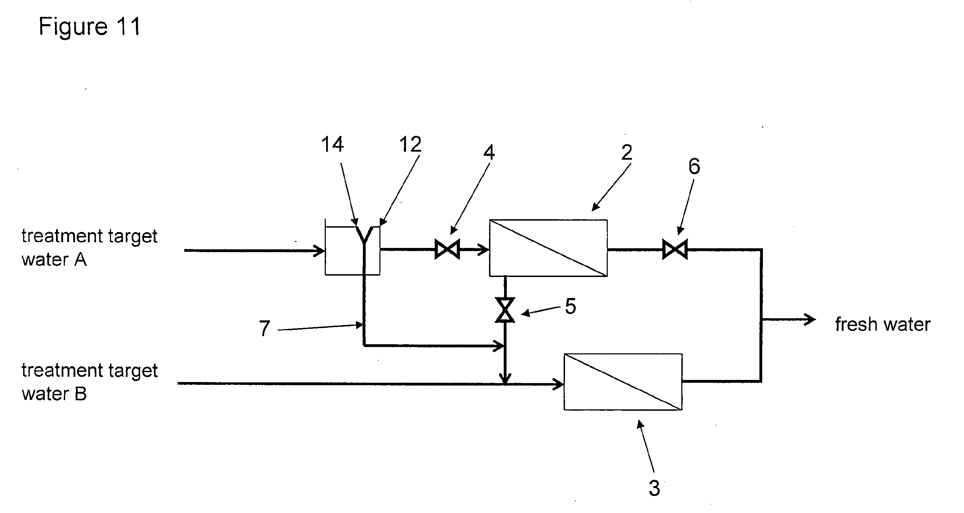

Further, it is preferable that a treatment target water A storage reservoir that stores the treatment target water A is provided, and the bypass line flow rate adjusting means is bypass line flow rate adjusting means that adjusts the flow rate of the treatment target water A delivered through the bypass line, depending on the water level of the treatment target water A stored in the treatment target water A storage reservoir. The treatment target water A storage reservoir is not particularly limited so long as it has a function of storing the treatment target water A. However, in a case where the treatment target water A undergoes pre-treatment as will be described later, it is preferable that it stores the pre-treated treatment target water A. Further, as the means for adjusting the flow rate of the treatment target water A delivered through the bypass line depending on the water level of the treatment target water A stored in the treatment target water A storage reservoir, there are means shown in Figs. 10 and 11, for example.

The means shown in Fig. 10 is provided with water level measuring means such as a water gauge 13, for measuring the water level of the treatment target water A storage reservoir 12, and it is means for adjusting the supply of the treatment target water A through the bypass line 7 using valves or a pump, in accordance with the water level value measured by the water level measuring means. In particular, by exerting control such that the supply of the treatment target water A through the bypass line 7 is automatically started when the water level becomes equal to or greater than a prescribed value, the treatment target liquid A can be supplied through the bypass line 7 without particular human intervention, when the supply amount to the first semipermeable membrane treatment plant 2 reduces or the flow rate of the treatment target water A increases because of, e.g., the whole or part of the first semipermeable membrane treatment plant 2 stopping its operation and the supply of the treatment target water A through the bypass line 7 being required. In particular, as shown in Fig. 11, by allowing the bypass line 7 to communicate with the overflow pipe 14 of the treatment target water A storage reservoir, it becomes possible to easily realize the function that is similar to that of Fig. 10 without the necessity of using a meter or devices such as a water gauge, a pump and valves and electrical control for them, and to contribute toward saving energy.

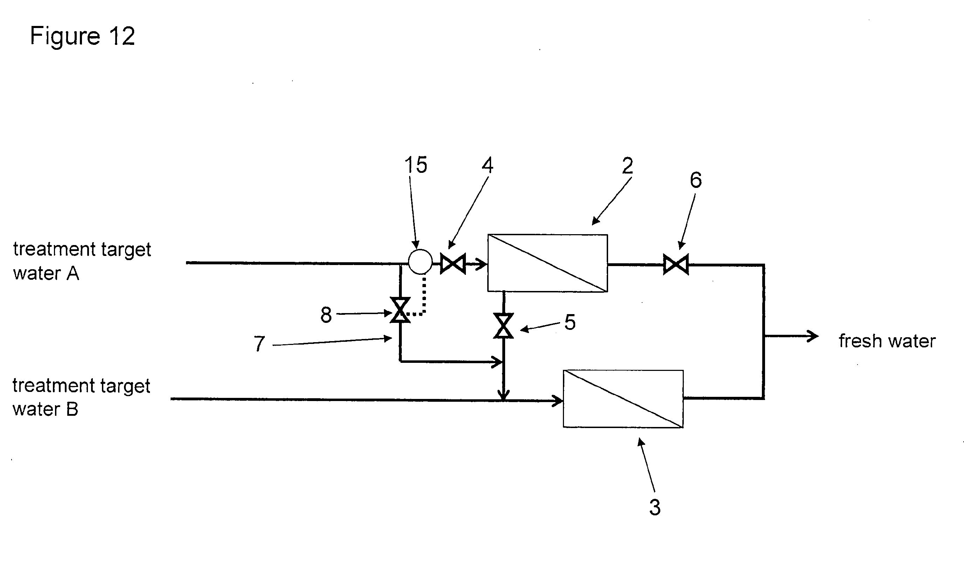

Further, as shown in Fig. 12, it is also preferable that first treatment target water flow rate measuring means, such as a flowmeter 15, for measuring the flow rate of the treatment target water A delivered to the first semipermeable membrane treatment plant 2 is provided, and the bypass line flow rate adjusting means, such as the bypass line valve 8, is bypass line flow rate adjusting means that adjusts the flow rate of the treatment target water A delivered to the bypass line 7 based on the flow rate value of the treatment target water A measured by the first treatment target water flow rate measuring means. The first treatment target water flow rate measuring means is not particularly limited, and anything that can measure the flow rate of the liquid, such as a flowmeter, will suffice. Specific method for adjusting the flow rate of the bypass line may be, for example, supplying the treatment target water A through the bypass line 7 when the flow rate value of the treatment target water A delivered to the first semipermeable membrane treatment plant 2 by the first treatment target water flow rate measuring means becomes smaller than that in the normal operation mode and becomes equal to or smaller than a prescribed value. Thus, particularly when the treatment amount at the first semipermeable membrane treatment plant 2 reduces because of the whole or part of the first semipermeable membrane treatment plant 2 stopping its operation or the like, the need for supply of the treatment target water A through the bypass line 7 can automatically be sensed.

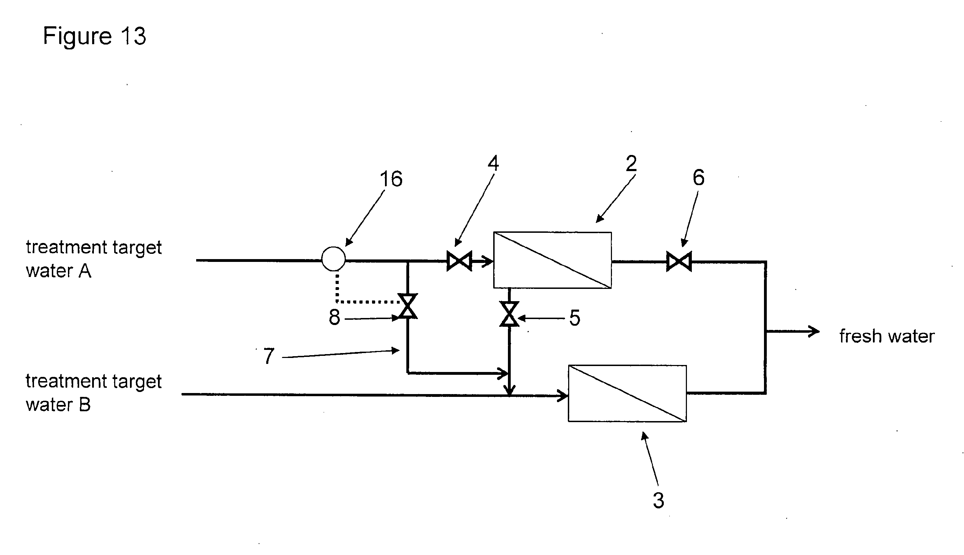

Further, it is also preferable that, as shown in Fig. 13, second treatment target water flow rate measuring means 16 for measuring the supply flow rate of the treatment target water A is provided, and the bypass line flow rate adjusting means, such as the bypass line valve 8, is bypass line flow rate adjusting means that adjusts the flow rate of the treatment target water A delivered to the bypass line 7 depending on the flow rate value of the treatment target water A measured by the second treatment target water flow rate measuring means 16. The second treatment target water flow rate measuring means is not particularly limited, similarly to the first treatment target water flow rate measuring means, and anything that can measure the flow rate of the liquid, such as a flowmeter, will suffice. Specificmethod for adjusting the flow rate of the bypass line may be, for example, supplying the treatment target water A through the bypass line 7 when the supply flow rate value of the treatment target water A by the second treatment target water flow rate measuring means becomes greater than that in the normal operation mode and becomes equal to or greater than a prescribed value. Thus, particularly when the flow rate of the treatment target water A increases, the treatment target water A can effectively be used by supplying the treatment target water A through the bypass line 7.

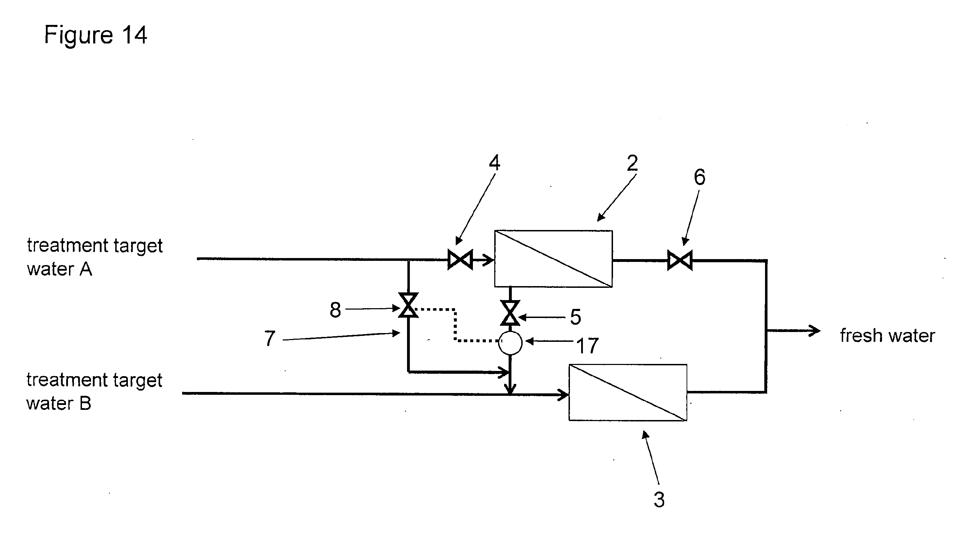

Further, as shown in Fig. 14, it is also preferable that concentrate flow rate measuring means for measuring the flow rate of the concentrate is provided, and the bypass line flow rate adjusting means is bypass line flow rate adjusting means that adjusts the flow rate of the treatment target water A delivered to the bypass line depending on the flow rate value of the concentrate measured by the concentrate flow rate measuring means. The concentrate flow rate measuring means is not particularly limited, similarly to the first and second treatment target water flow rate measuring means, and anything that can measure the flow rate of the liquid, such as a flowmeter, will suffice. Specific method for adjusting the flow rate of the bypass line may be, for example, supplying the treatment target water A through the bypass line 7 when the flow rate value of the concentrate supplied from the first semipermeable membrane treatment plant 2 by the concentrate flow rate measuring means becomes smaller than that in the normal operation mode and becomes equal to or smaller than a prescribed value. Thus, particularly when the treatment amount at the first semipermeable membrane treatment plant 2 reduces because of the whole or part of the first semipermeable membrane treatment plant 2 stopping its operation or the like, the need for supply of the treatment target water A through the bypass line 7 can automatically be sensed.

Further, it is also preferable that concentrate discharging means 18 for discharging at least part of the concentrate is provided, and when the treatment target water A is delivered from the bypass line 7, at least part of the concentrate is discharged by the concentrate discharging means 18 to the outside of the system. Generally, raw water used as the treatment target water A contains substances, e.g., a scale factor substance, an organic substance and the like, that have an effect of inhibiting the function of the semipermeable membrane treatment plant. Since these function inhibiting substances normally do not transmit through the semipermeable membrane treatment plant, the concentrate is higher in concentration than the treatment target water A. That is, as the raw water supplied to the second semipermeable membrane treatment plant 3, the treatment target water A is more suitable than the concentrate. Hence, in a case where the sum of the flow rate of the treatment target water A supplied from the bypass line 7 and the flow rate of the concentrate is obtained more than the needed amount as the diluting water for the treatment target water B, it becomes possible to suppress the impairment of the function of the second semipermeable membrane treatment plant and to extend the agent cleaning interval and the life of the membrane by discharging at least part of the concentrate by the concentrate discharging means 18 to thereby preferentially use the treatment target water A particularly when the treatment target water A is delivered from the bypass line 7.

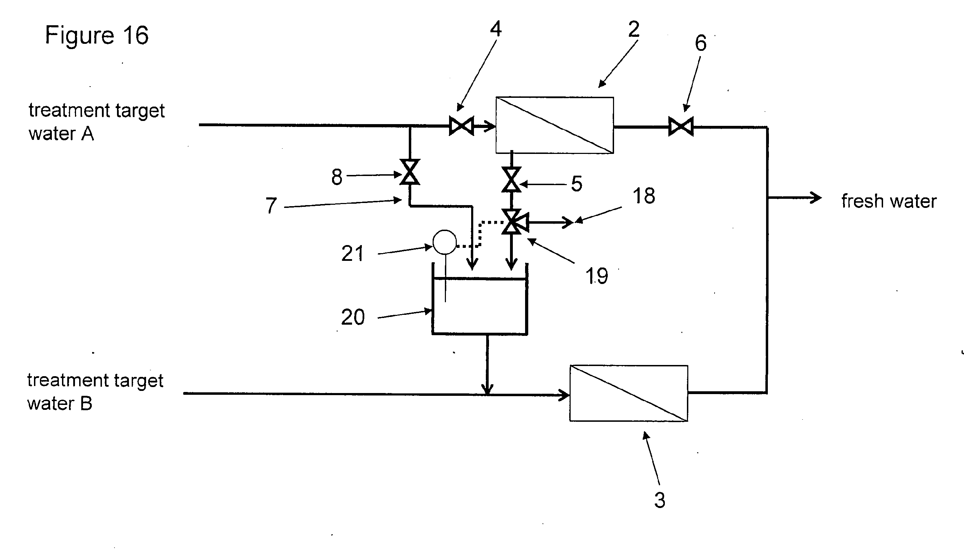

Further, as shown in Fig. 16, it is preferable that a concentrate storage reservoir 20 that stores the concentrate is provided, and that the bypass line 7 communicates with the concentrate storage reservoir 20. The concentrate storage reservoir 20 may be structured to normally store the concentrate; and to supply the treatment target water A when the treatment target water A is supplied through the bypass line. That is, the concentrate storage reservoir 20 stores the concentrate, the treatment target water A, or the mixed water of the concentrate and the treatment target water A. The water of those types all function as the diluting water for the treatment target water B by being mixed with the treatment target water B. For the second semipermeable membrane treatment plant 3 to stably operate, it is preferable to set the dilution factor of the treatment target water B to be constant, and to reduce the fluctuation in the osmotic pressure of the raw water supplied to the second semipermeable membrane treatment plant 3. To this end, the manner in which the concentrate, the treatment target water A or the mixed water of the concentrate and the treatment target water A each being the diluting water are once stored in the identical concentrate storage reservoir 20, and thereafter are mixed with the treatment target water B can rather achieve the stabilization of the dilution factor by the flow rate control.

Here, it is preferable that an overflow pipe to the concentrate storage reservoir 20 is provided, to achieve a structure capable of discharging the concentrate and the treatment target water A to the outside of the system when they are excessively great in amount. What is further preferable is provision of the concentrate discharging means 18 for discharging at least part of the concentrate to the outside of the system and concentrate discharge control means for discharging the concentrate through the concentrate discharging means 18 to the outside of the system when the water level of the concentrate storage reservoir 20 is equal to or greater than a prescribed value. Thus, the treatment target water A can preferentially be used than the concentrate, which further contributes toward the stable operation of the second semipermeable membrane treatment plant. Specific control method may be, for example as shown in Fig. 16, installing a water gauge 21 in the concentrate storage reservoir 20 that measures the water level therein, and switching a three-way valve 19 disposed at the concentrate discharging pipe branching point on the concentrate pipe so as to change the flow direction of the concentrate from the direction toward which the concentrate flows into the concentrate storage reservoir 20 to the direction toward which the concentrate flows into the concentrate discharging pipe, when the water level value measured by the water gauge 21 becomes equal to or greater than a prescribed value. Here, instead of the three-way valve, it is possible to realize a similar function by providing a valve on each of the concentrate discharging pipe and on the point between the concentrate discharging pipe branching point on the concentrate pipe and the concentrate storage reservoir 20.

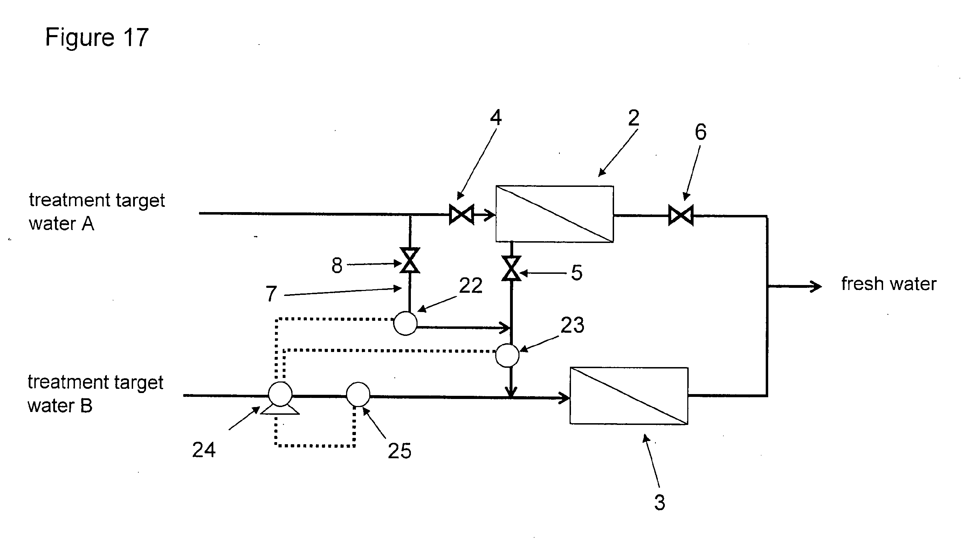

Further, as shown in Fig. 17, what is preferable is provision of bypass line flow rate measuring means 22 for measuring the flow rate of the treatment target water A delivered through the bypass line 7 or mixed water flow rate measuring means 23 for measuring the flow rate of the mixed water of the treatment target water A delivered through the bypass line 7 and the concentrate, and treatment target water B delivery means 24 for delivering the treatment target water B, and treatment target water B flow rate adjusting means for adjusting the flow rate of the treatment target water B delivered by the treatment target water B delivery means 24 depending on the flow rate value measured by the bypass line flow rate measuring means 22 and the mixed water flow rate measuring means 23. Thus, for example, in a case where the second semipermeable membrane treatment plant 3 has the structure that can withstand the osmotic pressure fluctuation of the raw water, when the flow rate of the treatment target water A and the concentrate being the diluting water of the treatment target water B increases because of the treatment target water A being delivered through the bypass line 7, a reduction in the flow rate of the treatment target water B brings about a reduction in the energy and cost for intake and delivery of the treatment target water B and the energy and cost required for the pre-treatment of the treatment target water B. Further, an increase in the dilution factor brings about a reduction in the osmotic pressure of the raw water supplied to the second semipermeable membrane treatment plant 3, which contributes toward a reduction in power of the high-pressure pump required for the second semipermeable membrane treatment plant 3. Further, for example when the second semipermeable membrane treatment plant 3 is structured with a plurality of system lines and part of the system lines is an auxiliary line, when the flow rate of the treatment target water A and the concentrate being the diluting water of the treatment target water B increases by the treatment target water A being delivered through the bypass line 7, an increase in the flow rate of the treatment target water B in accordance therewith such that the dilution factor becomes constant brings about an increase in the amount of raw water being treatable at the second semipermeable membrane treatment plant 3, and hence in the amount of product water.

Here, the bypass line flow rate measuring means and the mixed water measuring means are not particularly limited, and anything that can measure the flow rate of the liquid, such as a flowmeter, will suffice. The treatment target water B delivery means may be anything so long as it can deliver the treatment target water B. Generally, a liquid delivery pump is applicable, though liquid delivery means using the head difference can also be employed. Further, though the shape or scheme of the treatment target water B flow rate adjusting means is not particularly limited so long as the function that can adjust the flow rate of the treatment target water B is provided, there is a method including, as shown in Fig. 17: disposing a flowmeter 25 on the supply pipe of the treatment target water B; determining a delivered flow rate value of the treatment target water B based on the flow rate value of the flowmeter being the bypass line flow rate measuring means or the mixed water flow rate measuring means; adjusting the liquid delivery amount of the treatment target water B delivery means 24 such that the delivered flow rate value of the determined treatment target water B and the flow rate value measured by the flowmeter 25 become constant (specific examples are the inverter control in a case where the treatment target water B deliverymeans is a pump, and the opening degree adjustment by the solenoid valve in a case where natural hydraulic head is employed).

Here, a description will be given of the first semipermeable membrane treatment plant 2 and the second semipermeable membrane treatment plant 3 that treat the treatment target water A or the treatment target water B. A semipermeable membrane is a semipermeable membrane that allows part of the components contained in the treatment target liquid, e.g., solvent to permeate through, and that does not allow other components to permeate through. In connection with the water treatment technology, examples of the semipermeable membrane maybe an NF membrane, an RO membrane and the like. The NFmembrane or the RO membrane is required to possess the performance of being capable of reducing the concentration of the solute contained in the treatment target water to the level at which it can be used as reclaimed water. Specifically, it is required to possess the performance of blocking various ions such as salt, mineral components and the like, e.g., divalent ions such as calcium ions, magnesium ions, and sulfate ions, the monovalent ions such as sodium ions, potassium ions, and chlorine ions, and dissoluble organic substances such as humic acid (molecular weight M_{w} ≥ 100,000), fulvic acid (molecular weight M_{w} = 100 to 1,000), alcohol, ether, and sugars. The NFmembrane is defined as a filtration membrane whose operation pressure is equal to or smaller than 1.5 MPa, and whose molecular weight cutoff ranges from 200 to 1,000, and sodium chloride blocking rate is equal to or smaller than 90%. A membrane whose molecular weight cutoff is smaller than that and which possesses high blocking performance is referred to as the RO membrane. Further, of the RO membranes, one close to the NF membrane is referred also to as the loose RO membrane.

The NF membrane and the RO membrane can take forms of a hollow fiber membrane and a flat sheet membrane, to both of which the present invention can be applied. Further, in order to achieve easier handling, a fluid separation device (element) can be used, in which the hollow fiber membrane or the flat sheet membrane is stored in a casing. Preferably, the fluid separation device has the following structure in a case where the flat sheet membrane is used as the NF membrane or the RO membrane: a membrane unit, including the permeate flow channel member made up of the NF membrane or the RO membrane and tricot and a feed water flow channel member such as a plastic net, is wrapped around a cylindrical center pipe to which a multitude of pores are bored, which is then entirely stored in a cylindrical casing. It is also preferable to connect a plurality of fluid separation devices in series or in parallel so as to forma separationmembrane module. In this fluid separation device, the feed water is supplied from one end into the unit, and before it reaches the other end, the permeate permeating through the NF membrane or the RO membrane flows into the center pipe, and taken out of the center pipe at the other end. On the other hand, the feed water that did not permeate through the NF membrane or the RO membrane is taken out as the concentrate at the other end.

As the membrane material for the NF membrane or the RO membrane, polymer materials such as cellulose acetate, cellulose-base polymer, polyamide, and vinyl polymer can be used. Representative NF/RO membranes may be a cellulose acetate-base or polyamide-base asymmetric membrane, and a composite membrane having a polyamide-base or polyurea-base active layer.

Meanwhile, in the present invention, since the treatment target water A and the treatment target water B are directly supplied to the first semipermeable membrane treatment plant 2 and the second semipermeable membrane treatment plant 3 in Fig. 2, in a case where organic substances or particulates are contained in the treatment target water A and/or the treatment target water B, they may be caught by the membrane(s) of the first semipermeable membrane treatment plant 2 and/or the second semipermeable membrane treatment plant 3, whereby the membranes tend to be clogged. This may possibly make the membranes incapable of being used for a long term. This invites frequent replacement of the semipermeable membranes in the plants, and therefore the labor cost or the membrane cost increases, and consequently the water production cost increases.

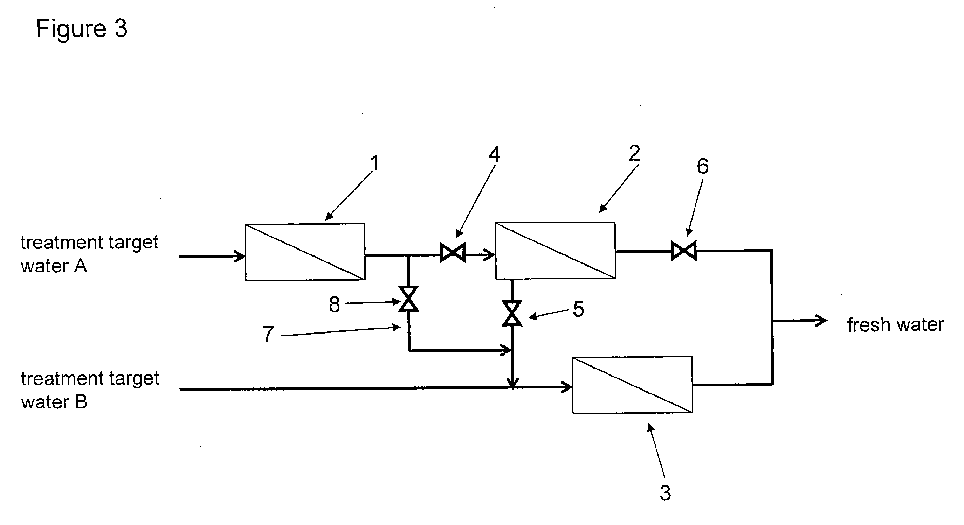

Accordingly, in the present invention, as shown in Figs. 3 to 8, the first pre-treatment plant 1 and/or second pre-treatment plant 9 is/are provided to the first semipermeable membrane treatment plant 2 and/or the second semipermeable membrane treatment plant 3, respectively. Thus, what is implemented is a water producing system in which, after the treatment target water is pre-treated at the first pre-treatment plant 1 and/or the second pre-treatment plant 9, treatment is carried out at the first semipermeable membrane treatment plant 2 and/or the second semipermeable membrane treatment plant 3, whereby fresh water is produced. In a case where the organic substances or particulates are contained in the treatment target water A and/or the treatment target water B, this system can suitably be employed. Employing the system, since the treatment target water is treated at the pre-treatment plant, the membranes in the semipermeable membrane treatment plants at the rear stage will not be clogged by the organic substances and the particulates in the treatment target water, and it becomes possible to extend the life of the membranes in the semipermeable membrane treatment plants.

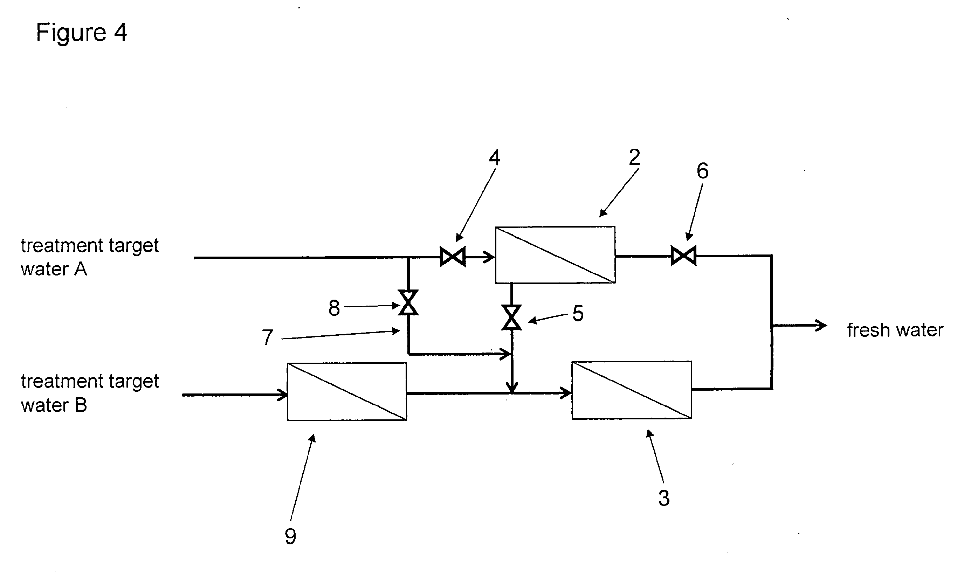

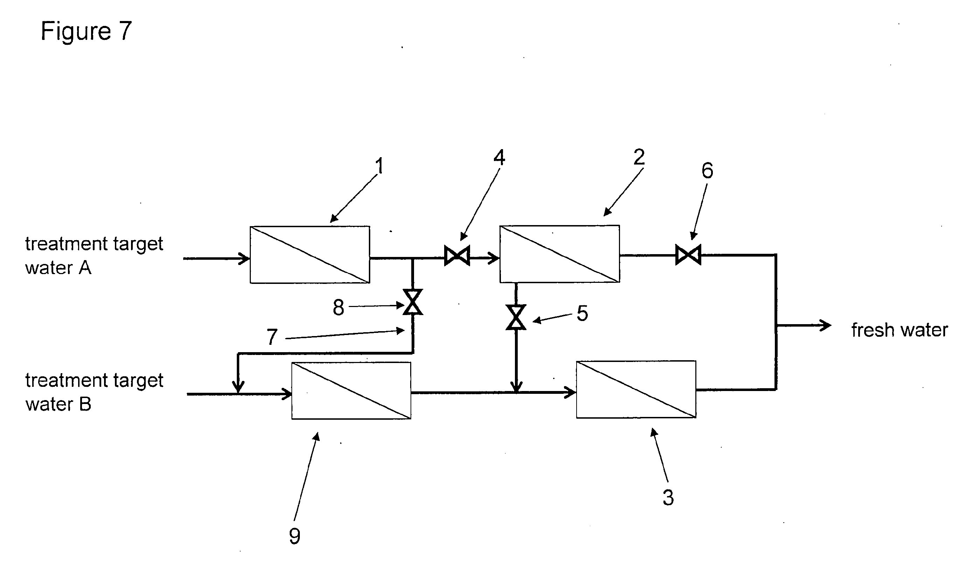

Here, a detailed description will be given of Figs. 4 and 7 which are the illustrations for specifically describing the modes of the present invention.

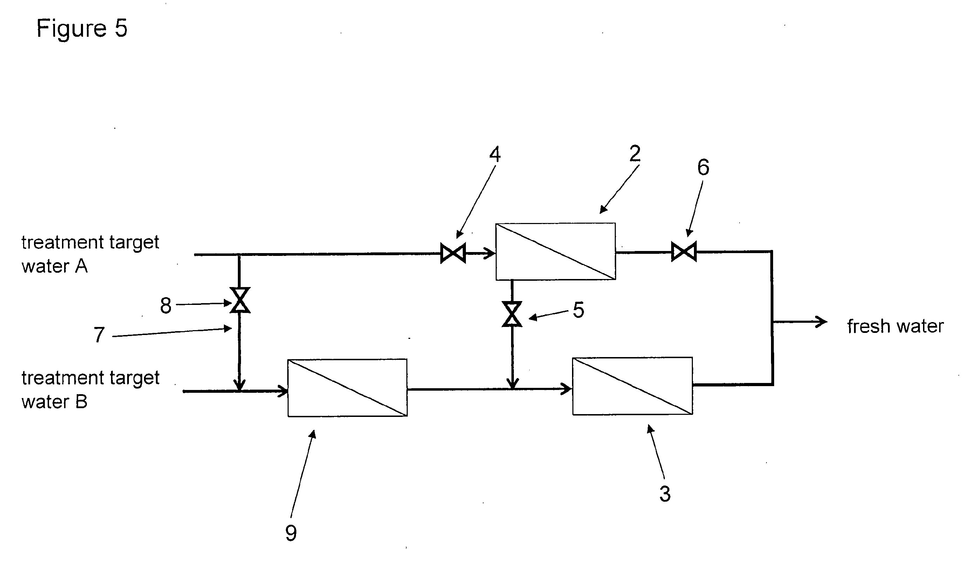

Figs. 4 and 5 each show a case in which the treatment target water B treatment line side solely is provided with the second pre-treatment plant 9. In the normal treatment of the treatment target water A and the treatment target water B with the system, the feed water valve 4, the concentrate valve 5, and the product water valve 6 connected to the first semipermeable membrane treatment plant 2 are all opened, while the bypass line valve 8 for the treatment target water A is closed, so as to prevent the treatment target water A from flowing into the bypass line pipe 7 for the treatment target water A. However, when any trouble occurs at the first semipermeable membrane treatment plant 2 and it becomes impossible for the first semipermeable membrane treatment plant 2 to carry out treatment, the feed water valve 4, the concentrate valve 5, and the product water valve 6 connected to the first semipermeable membrane treatment plant 2 are all closed, while the bypass line valve 8 is opened, so as to allow the treatment target water A to flow into the bypass line pipe 7 to merge with the treatment target water B treatment line. Here, depending on the water quality of the treatment target water A, the confluence point in the bypass line can be changed. When the content concentration of the organic substances and the particulates in the treatment target water A is low, the membrane of the second semipermeable membrane treatment plant 3 is less prone to be clogged. Therefore, as shown in Fig. 4, it is preferable to allow the treatment target water A to merge with the treated water in the second pre-treatment plant 9, to be treated at the second semipermeable membrane treatment plant 3, to thereby obtain fresh water. On the other hand, when the content concentration of the organic substances and particulates in the treatment target water A is high, the membrane of the second semipermeable membrane treatment plant 3 is prone to be clogged. Therefore, as shown in Fig. 5, it is preferable to allow the treatment target water A to be merged with the treatment target water B, to be treated at the second pre-treatment plant 9, and then to be treated at the second semipermeable membrane treatment plant 3, to thereby obtain fresh water.

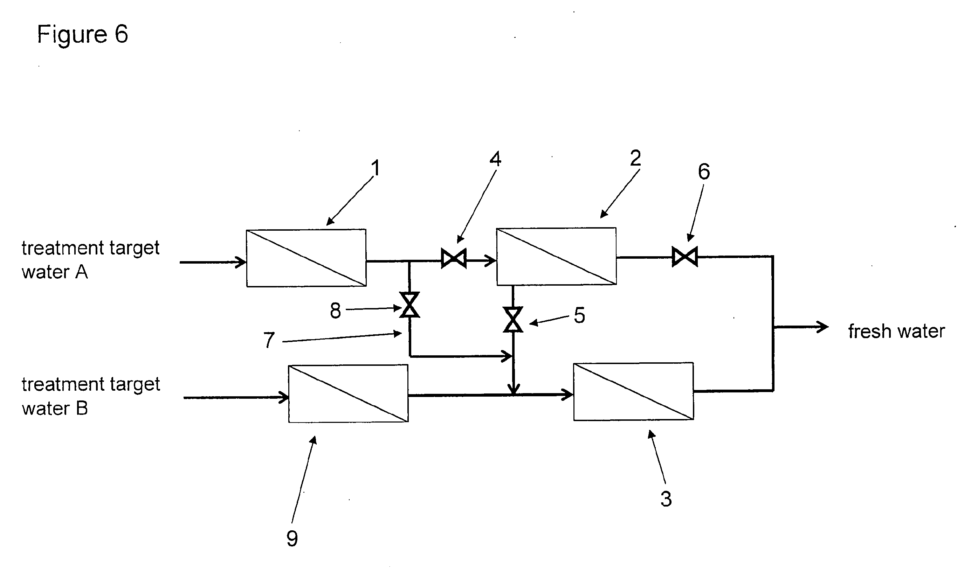

Figs. 6 and 7 each show a case in which the first pre-treatment plant 1 is provided on the treatment target water A treatment line side, and the second pre-treatment plant 9 is provided on the treatment target water B treatment line side. In the normal treatment of the treatment target water A and the treatment target water B with the system, the feed water valve 4, the concentrate valve 5, and the product water valve 6 connected to the first semipermeable membrane treatment plant 2 are all opened, while the bypass line valve 8 for the treatment target water A is closed, so as to prevent the treatment target water A from flowing into the bypass line pipe 7 for the treatment target water A. However, when any trouble occurs at the first semipermeable membrane treatment plant 2 and it becomes impossible for the first semipermeable membrane treatment plant 2 to carry out treatment, the feed water valve 4, the concentrate valve 5, the product water valve 6 connected to the first semipermeable membrane treatment plant 2 are all closed, while the bypass line valve 8 is opened, so as to allow the treatment target water A to flow into the bypass line pipe 7 to merge with the treatment target water B treatment line. Here, depending on the water quality of the treated water of the first pre-treatment plant 1, the confluence point of the bypass line can be changed. When the content concentration of the organic substances and particulates in the treated water in the first pre-treatment plant 1 is low, the membrane of the second semipermeable membrane treatment plant 3 is less prone to be clogged. Therefore, as shown in Fig. 6, it is preferable to allow the treated water to merge with the treated water in the second pre-treatment plant 9, to be treated at the second semipermeable membrane treatment plant 3, to thereby obtain fresh water. On the other hand, when the content concentration of the organic substances and the particulates in the treated water in the first pre-treatment plant 1 is high, the membrane of the second semipermeable membrane treatment plant 3 is prone to be clogged. Therefore, as shown in Fig. 7, it is preferable to allow the treated water to be merged with the treatment target water B, to be treated at the second pre-treatment plant 9, and then to be treated at the second semipermeable membrane treatment plant 3, to thereby obtain fresh water.

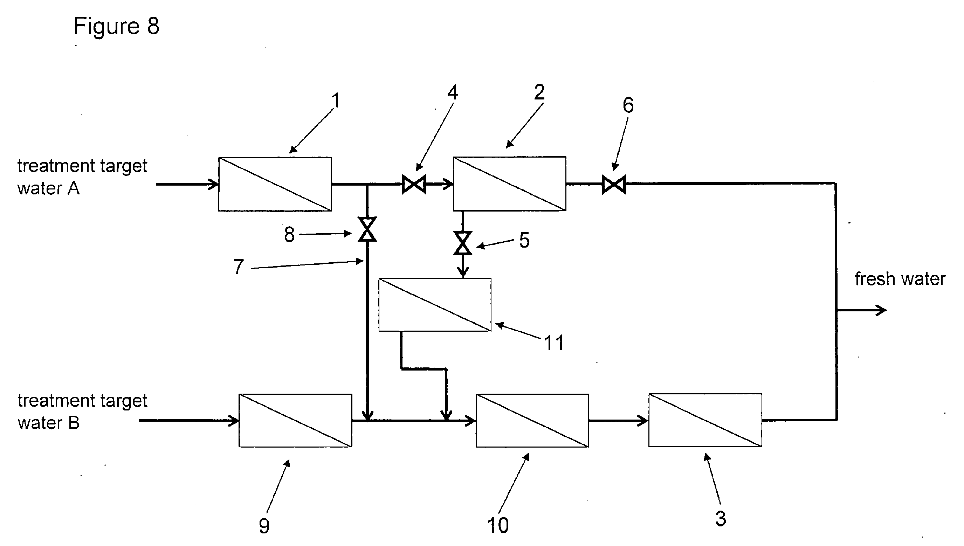

Further, in the present invention, it is possible to provide the pre-treatment plants also on the bypass line and/or the concentrate line for discharging from first semipermeable membrane treatment plant 2 as necessary. Fig. 8 shows one preferred mode of the present invention in which a third pre-treatment plant 10 is provided on the bypass line, and a fourth pre-treatment plant 11 is provided on the concentrate line for discharging from the first semipermeable membrane treatment plant 2. The combination of the pre-treatment plants may be determined depending on the water quality of the treatment target water A and the treatment target water B, and a plurality of treatments can be combined in each of the pre-treatment plants.

Here, a description will be given of the first pre-treatment plant 1, the second pre-treatment plant 9, the third pre-treatment plant 10, and the fourth pre-treatment plant 11. Each of the pre-treatment plants is not particularly limited, and an activated sludge treatment plant, a two-step treatment plant of the activated sludge treatment and the MF/UF membrane or the sand filtration, an MBR plant, an MF/UF membrane filtration treatment plant, a sand filtration treatment plant or the like can be used. Further, in order to allow the pre-treatment plants to operate efficiently, a flocculating agent, a pH adjusting agent, and an oxidizing agent such as sodium hypochlorite may be added. Further, in a case where a membrane is used in each pre-treatment plant, which membrane to use is not particularly limited, and a flat sheet membrane, a hollow fiber membrane, a tubular membrane, and a membrane of any other shape can be used as appropriate. Though the material of the membrane is not particularly limited, it is preferable that at least one selected from the group consisting of polyacrylonitrile, polyphenylene sulfone, polyphenylene sulfide sulfone, polyvinylidene fluoride, polypropylene, polyethylene, polysulfone, polyvinyl alcohol, cellulose acetate, an inorganic material such as ceramics is included.

### INDUSTRIAL APPLICABILITY

The present invention relates to a water producing system using a composite water treatment technology, which can be used as a system in which fresh water is obtained through the fresh water conversion technology from raw water, which is treatment target water A and treatment target water B.

### Description of Reference Characters

- 1:: first pre-treatment plant
- 2:: first semipermeable membrane treatment plant
- 3:: second semipermeable membrane treatment plant
- 4:: feed water valve
- 5:: concentrate valve
- 6:: product water valve
- 7:: bypass line pipe
- 8:: bypass line valve
- 9:: second pre-treatment plant
- 10:: third pre-treatment plant
- 11:: fourth pre-treatment plant
- 12:: treatment target water A storage reservoir
- 13:: water gauge
- 14:: overflow pipe
- 15:: first treatment target water flow rate measuring means (flowmeter)
- 16:: second treatment target water flow rate measuring means (flowmeter)
- 17:: concentrate flow rate measuring means (flowmeter)
- 18:: concentrate discharging means
- 19:: three-way valve
- 20:: concentrate storage reservoir
- 21:: water gauge
- 22:: bypass line flow rate measuring means (flowmeter)
- 23:: mixed water flow rate measuring means (flowmeter)
- 24:: treatment target water B delivery means (pump)
- 25:: flowmeter

## Claims

1. A water producing system that produces fresh water by treating treatment target water A at a first semipermeable membrane treatment plant, that mixes concentrate resulted by the treatment carried out at the first semipermeable membrane treatment plant with treatment target water B, and that treats the mixed water at a second semipermeable membrane treatment plant to produce fresh water, wherein
a bypass line that allows the treatment target water A to be mixed with the treatment target water B or the concentrate while bypassing the first semipermeablemembrane treatment plant is provided.

2. The water producing system according to claim 1, comprising
bypass line flow rate adjusting means for adjusting flow rate of the treatment target water A to be delivered to the bypass line.

3. The water producing system according to claim 2, comprising
a treatment target water A storage reservoir that stores the treatment target water A, wherein
the bypass line flow rate adjusting means is bypass line flow rate adjusting means that adjusts the flow rate of the treatment target water A to be delivered to the bypass line depending on a water level of the treatment target water A stored in the treatment target water A storage reservoir.

4. The water producing system according to one of claim 2 and claim 3, comprising
first treatment target water flow rate measuring means for measuring the flow rate of the treatment target water A to be delivered to the first semipermeable membrane treatment plant, wherein
the bypass line flow rate adjusting means is bypass line flow rate adjusting means for adjusting the flow rate of the treatment target water A to be delivered to the bypass line depending on flow rate value of the treatment target water A measured by the first treatment target water flow rate measuring means.

5. The water producing system according to one of claims 2 to 4, comprising
second treatment target water flow rate measuring means for measuring a supply flow rate of the treatment target water A, wherein
the bypass line flow rate adjusting means is bypass line flow rate adjusting means for adjusting the flow rate of the treatment target water A to be delivered to the bypass line depending on the flow rate value of the treatment target water A measured by the second treatment target water flow rate measuring means.

6. The water producing system according to one of claims 2 to 5, comprising
concentrate flow rate measuring means for measuring flow rate of the concentrate, wherein
the bypass line flow rate adjusting means is bypass line flow rate adjusting means for adjusting the flow rate of the treatment target water A to be delivered to the bypass line depending on the flow rate value of the concentrate measured by the concentrate flow rate measuring means.

7. The water producing system according to one of claims 1 to 6, comprising
concentrate discharging means for discharging at least part of the concentrate to outside of the system, wherein
at least part of the concentrate is discharged by the concentrate discharging means when the treatment target water A is delivered from the bypass line.

8. The water producing system according to one of claims 1 to 7, comprising
a concentrate storage reservoir that stores the concentrate, wherein
the bypass line communicates with the concentrate storage reservoir.

9. The water producing system according to claim 8, comprising:
concentrate discharging means for discharging at least part of the concentrate to outside of the system; and
concentrate discharge control means for discharging the concentrate to the outside the system by the concentrate discharging means when a water level of the concentrate storage reservoir is equal to or greater than a prescribed value.

10. The water producing system according to claim 9, comprising:
bypass line flow rate measuring means for measuring flow rate of the treatment target water A being delivered through the bypass line, or mixed water flow rate measuring means for measuring flow rate of mixed water of the treatment target water A being delivered through the bypass line and the concentrate; treatment target water B delivery means for delivering the treatment target water B; and treatment target water B flow rate adjusting means for adjusting flow rate of the treatment target water B to be delivered by the treatment target water B delivery means, based on flow rate value measured by the bypass line flow rate measuring means or the mixed water flow rate measuring means.

11. The water producing system according to one of claims 1 to 10, wherein
the treatment target water A is treated at a first pre-treatment plant, and thereafter treated at the first semipermeable membrane treatment plant, to produce fresh water.

12. The water producing system according to one of claims 1 to 11, wherein
the treatment target water B is treated at a second pre-treatment plant, and thereafter treated at a second semipermeable membrane treatment plant, to produce fresh water.
